# EUROPEAN PATENT APPLICATION

(11) **EP 2 163 973 A2**
(43) Date of publication of application: **17.03.2010**
(21) Application number: 09167799.7
(22) Date of filing: 13.08.2009
(51) Int. Cl.: G06F 3/048

(54) **On-screen virtual keyboard system**

(30) Priority: 05.09.2008 TW 97134267
(71) Applicant: Mitake Information Corporation, Taipei (TW)
(72) Inventor: Chiu, Hung Che, Taipei City 100 (TW)
(74) Representative: nospat Patent- und Rechtsanwälte Naefe Oberdorfer Schmidt

(57) **Abstract**

An on-screen virtual keyboard system includes a simplified virtual keyboard layout, at least a traditional virtual keyboard layout, and a memory segment. The simplified virtual keyboard layout has a plurality of reserved keys for entering input characters and a traditional layout switch key for switching the simplified virtual keyboard layout to the traditional virtual keyboard layout. The traditional virtual keyboard layout has a simplified layout switch key for switching to the simplified virtual keyboard layout and an input character keys for entering the input characters. The memory segment stores the latest user-entered or user-defined input characters. The input characters stored in the memory segment are mapped to the reserved keys of the simplified virtual keyboard layout, so the input characters and numeric keys are displayed in the simplified virtual keyboard layout simultaneously, and the user is able to quickly select and enter any of the stored input characters.

## Description

### Background of the invention

### Technical Field

The present invention relates to a virtual keyboard system on a touch screen operated electronic device and a input method, and more particularly, to a virtual keyboard system and a input method memorizing common alphabetic characters defined by a user or the alphabetic characters entered by a user in the last few times. Therefore, when entering data with the virtual keyboard system, the amount of the steps for switching among several virtual keyboard layouts is reduces and the operation for entering the contents is simplified.

### Related Art

Generally, a mobile touch screen operated electronic device does not have a built-in physical keyboard. Therefore, the user has to click on an on-screen virtual keyboard/on-screen keyboard (also called a software keyboard), to operate the electronic device and enter data to the electronic device.

A screen of a mobile electronic device is small, so the characters typically used, including alphabetic characters, numeric characters, punctuation symbols, phonetic symbols (used in the phonetic input method editor to build Chinese characters), numerical operators, auxiliary function keys etc, cannot be displayed on one virtual keyboard layout simultaneously. Therefore, keys corresponding to various characters and numerical operators are categorized into groups, and each group is distributed to one of a plurality of virtual keyboard layouts after being categorized. The keyboard layout displayed on the screen is switched from one of the virtual keyboard layouts to another, so as to ensure that all the keys can be used by the user.

According to key types, generally the virtual keyboard layouts may include a numeric keyboard layout, a numeric and symbolic keyboard layout, an alphabetic character keyboard layout, an alphanumeric keyboard layout, an alphabetic character and symbolic keyboard layout, a symbolic keyboard layout, a phonetic symbolic keyboard layout, or other Chinese character input method keyboard (for example, Tsang-Jye input method), etc. The virtual keyboard layouts are combined and used with the auxiliary function keys, such as a Shift key 56, a Tab key 54, a Control/Ctrl key 58, a Backspace key 62, direction keys 52, an Enter key 60, and an Esc key.

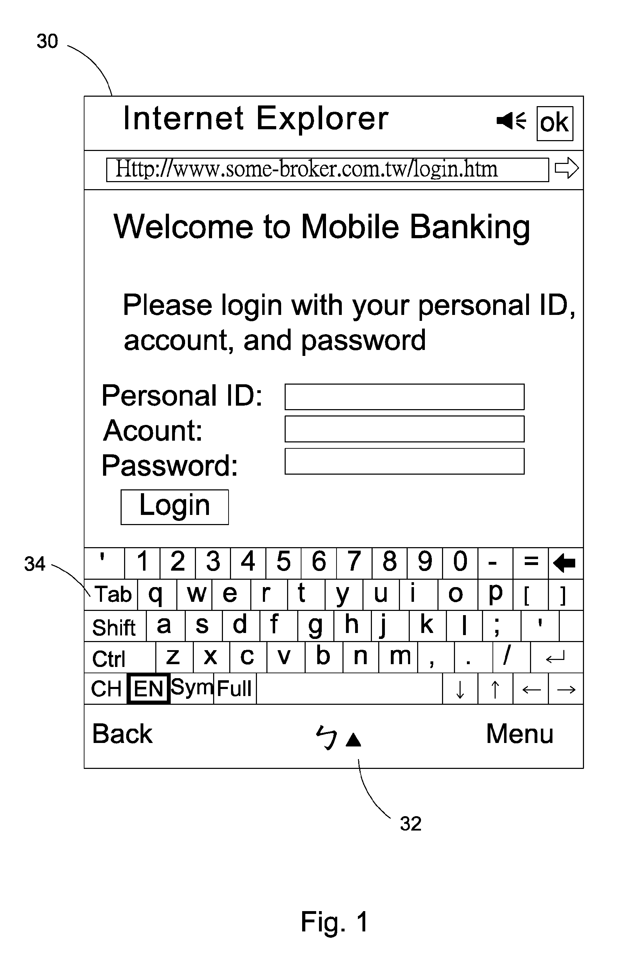

Referring to FIGs. 1 to 4, a personal digital assistant (PDA) running Microsoft(R) Windows Mobile(R) operating system is taken as an illustration. An application program frame 30 is used to illustrate the common virtual keyboard layouts in the prior art. In the application program frame 30, virtual keyboard layouts 34, 36, 38, and 40 are displayed on the application program frame 30 after pressing a display/hide key 32.

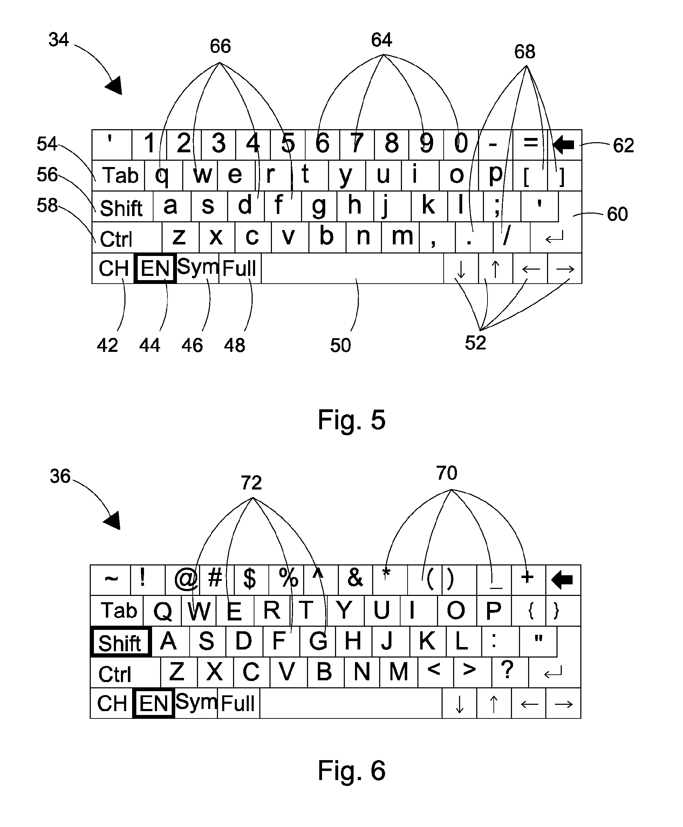

FIGs. 5 to 8 are enlarged views of the virtual keyboard layouts in FIGs. 1 to 4. In the prior art, in order to reduce the inconvenience of the operation of switching between the different keyboard layouts by the user, the size of each key in the virtual keyboard layouts of the touch screen operated electronic device is minimized, such that more keys can be displayed in one virtual keyboard layout and fewer virtual keyboard layouts are required.

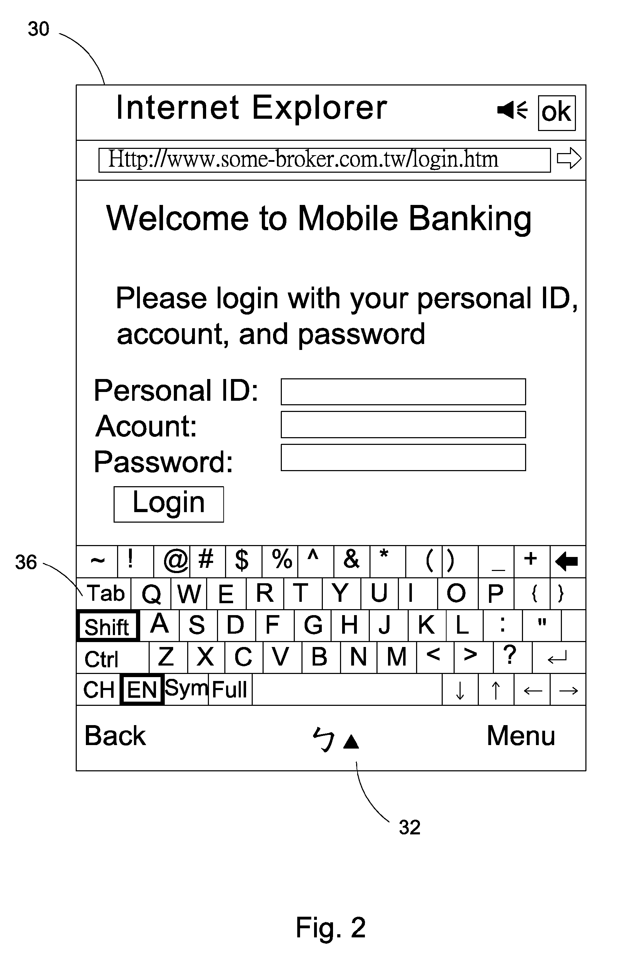

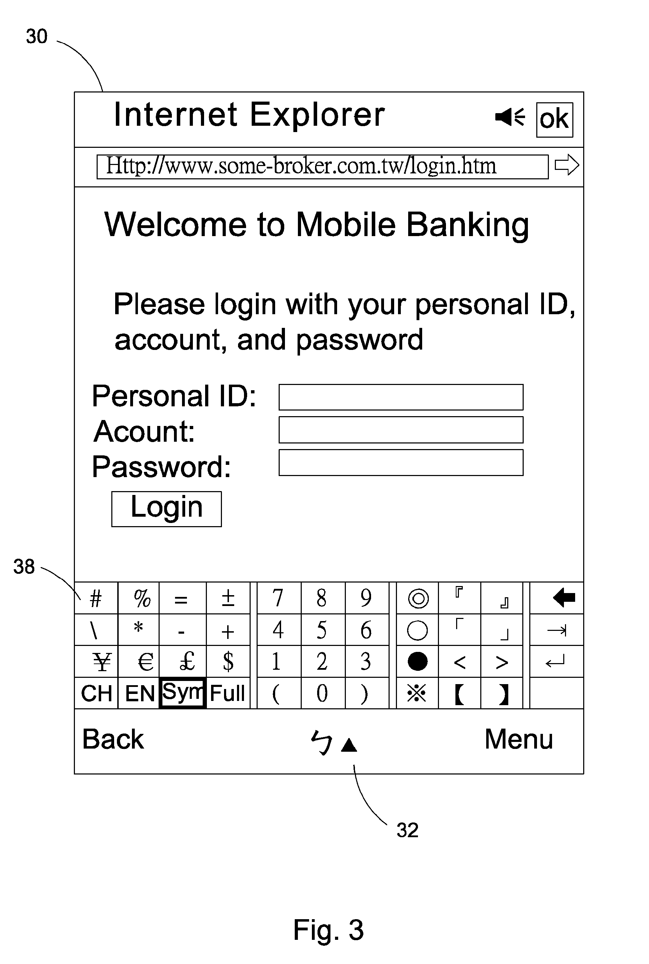

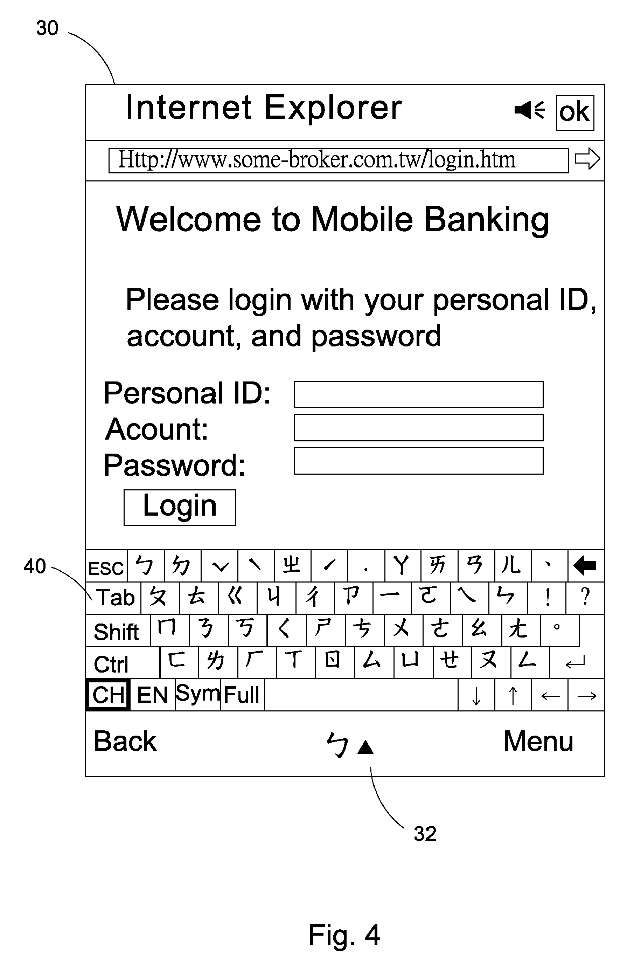

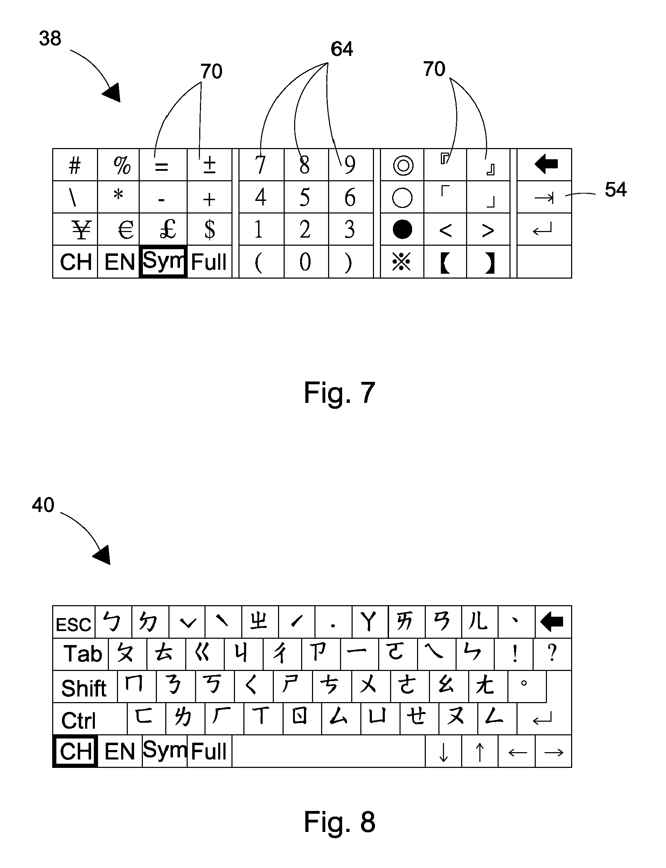

The common virtual keyboard layouts, 34, 36, 38, and 40 include the following combinations: numeric keys combined with lower case alphabetic character keys 66 and common symbol keys 68 (referring to FIGs. 1 and 5), upper case alphabetic character keys 72 combined with common symbol keys 68 (referring to FIGs. 2 and 6), numeric keys 64 combined with symbol keys 70 (referring to FIGs. 3 and 7), phonetic symbol keys combined with common punctuation symbol keys 68 (referring to FIGs. 4 and 8), and other combinations. The greater the number of combined keys on one virtual keyboard layout, the smaller a display area of each key is, and the smaller a gap between two neighboring keys are.

Therefore, when operating the device using fingers instead of a stylus, it is far easier for the user to mis-touch neighboring keys, which is a disadvantage of the virtual keyboard layout of the touch screen operated electronic device in the prior art. If the display area of each key is enlarged to facilitate the user to touch the key by using the fingers, the amount of the keys displayed in one virtual keyboard layout is reduced, so the frequency of switching between the different virtual keyboard layouts by the user is increased, which is of great inconvenience for the user when operating the device, which is another disadvantage of the prior art.

When the user intends to input numeric characters combined with a few common alphabetic characters (for example, input ID numbers, login accounts, or login passwords on web pages), two input methods using the virtual keyboard exist in the prior art.

In the first method, a virtual keyboard layout having numeric keys combined with alphabetic keys is used to enter numeric characters and alphabetic characters in one virtual keyboard layout without switching between two or more virtual keyboard layouts. However, the upper/lower case of the alphabetic character still needs to be switched by pressing the Shift key.

In the second method, a virtual keyboard layout having numeric keys and another virtual keyboard layout having alphabetic keys are used alternatively, the combination having numeric characters and alphabetic characters is entered after switching between the two keyboard layouts, and the upper/lower case of the alphabetic character is also entered after pressing the Shift key.

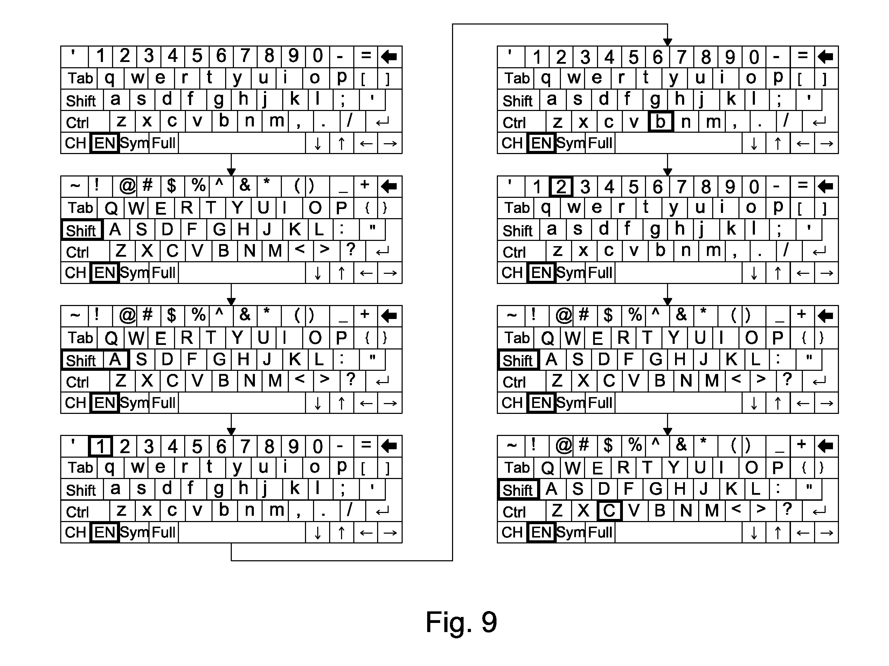

Referring to FIG. 9, an illustration of entering combination "Alb2C" having numeric characters and alphabetic characters is shown. To enter the having numeric characters and alphabetic characters by using the traditional virtual keyboard layout, the following steps are performed:
1. Start an input function of the electronic device to display the virtual keyboard layout;
2. Press the Shift key to switch to the upper case alphabetic character;
3. Enter "A" (the virtual keyboard layout is switched to the lower case alphabetic character automatically after the upper case alphabetic character "A" is entered);
4. Enter "1";
5. Enter "b";
6. Enter "2";
7. Press the Shift key to switch to the upper case alphabetic character;
8. Enter "C".

It may be known that when the traditional virtual keyboard layout having alphabetic keys combined with numeric keys is used, it is not required to switch the displayed virtual keyboard among a numeric keyboard layout and the alphabetic keyboard layout. However, to enter the short combination "Alb2C", night steps is required (the amount of the steps depends on the data to be entered).

Short combination such as personal identity numbers in countries other than U.S., login accounts, and passwords, is frequently entered by the user. In general, the combination includes 1 to 6 alphabetic characters (for example, the identity number only includes 1 alphabetic character), even if these 1 to 6 alphabetic characters are the characters usually used by the user, complicated steps in the use of the traditional virtual keyboard layout cannot be reduced.

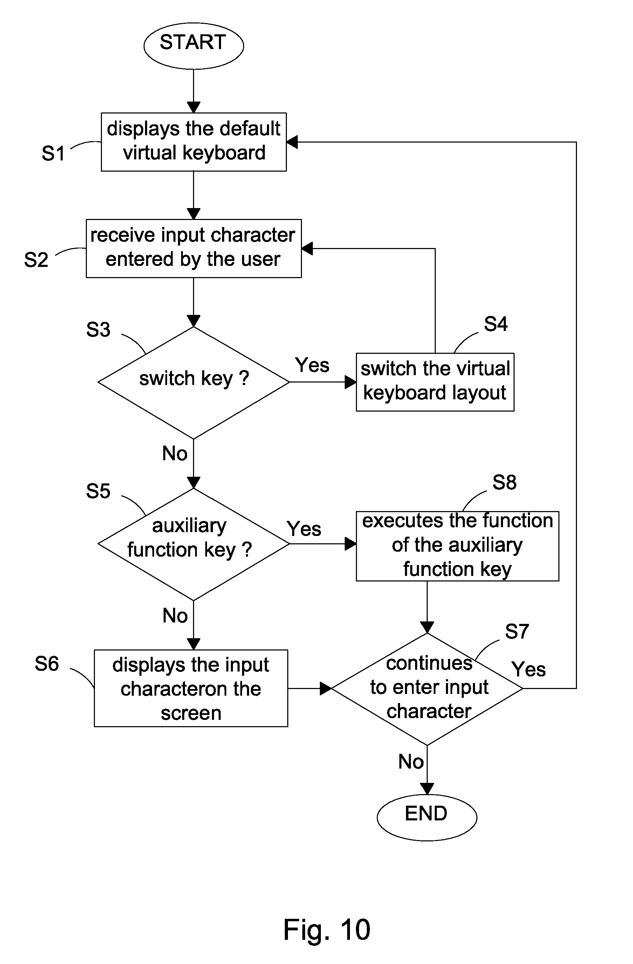

Referring to FIG. 10, in which an operation flow chart of a virtual keyboard layout in an electronic device according to the prior art is shown. A PDA running Microsoft(R) Windows Mobile(R) operating system is taken as an illustration. After the user clicks on the display/hide key 32 of the virtual keyboard layout on the screen of the PDA, the screen displays the default virtual keyboard (S1). Next, the electronic device waits to receive input character entered by the user through the virtual keyboard layout 34 (S2). Then, the electronic device determines whether or not the key pressed by the user is an alphabetic character switch key 42, a symbol switch key 44, a phonetic character switch key 46, or a full-shape switch key 48 (S3). If yes, the electronic device switches the virtual keyboard layout displayed on the screen to the alphabetic keyboard layout, the symbol keyboard layout, the phonetic keyboard layout full-shape keyboard layout, and the procedure returns to Step S2 to again await the user input (S2). If the electronic device determines that the input character entered is not the alphabetic character switch key 42, the symbol switch key 44, the phonetic character switch key 46, or the full-shape switch key 48 in Step S3, the procedure proceeds to a next step to determine whether the input character entered is the auxiliary function key or not (S5) (for example, the upper and lower case Shift key 56, the Tab key 54, the Control/Ctrl key 58, the Backspace key 62, the direction keys 52, and the Enter key 60). If the electronic device determines that the input character entered by the user is not the auxiliary function key in Step S5 (that is, numbers/texts/symbols), the electronic device displays the input character entered by the user on the screen (S6). For example, when the input character entered by the user is A, A is displayed on the screen. Then, the procedure proceeds to the next step, so as to determine whether or not the user continues to enter input character (S7).

If the electronic device determines that the user does not continue entering the input character in Step S7, the operation is end. If the electronic device determines that the user keeps on entering the information in Step S7, Step S1 is again performed, so as to keep on displaying the virtual keyboard layout (S1).

If the electronic device determines that the input character entered by the user is the auxiliary function key in Step S5, the electronic device executes the function of the auxiliary function key (S8). For example, if the input character entered is the Backspace key 62, it is displayed on the screen that the last number/text/symbol is deleted, and if the input character entered is the Enter key 60, a new line is added and displayed on the screen, or it is displayed that a default key in the program is entered or selected. After the function of the auxiliary function key has been executed, the procedure proceeds to Step S7 in which the user decides whether to keep on entering the input character or not. If no, the flow is ended, but if yes, the procedure returns to Step S1.

In the above accompanying drawings, a PDA running Microsoft(R) Windows Mobile(R) operating system is taken as an illustration. Although other touch screen operated electronic devices with different operating systems also have virtual keyboard layouts with different appearances (for example, the virtual keyboard layouts having different key type combinations and different key position distributions), the disadvantages are the same as with the above-mentioned example. For example, the devices do not have a key memory function, and the number of keys on the layouts is large, such that the keys are small and are inconvenient to use.

### Summary of the invention

It may be known from an operating flow of a virtual keyboard of an electronic device in the prior art that the electronic device having virtual keyboards in the prior art do not memorize input character entered by a user, so that when a combination having numeric characters and alphabetic characters are entered, it is necessary to switch the displayed virtual keyboard layout among different virtual keyboard layouts, complicating operation of entering a combination having numeric characters and alphabetic characters.

In view of the above problem, the present invention provides a on-screen virtual keyboard system, which stores common alphabetic characters defined by a user, or the alphabetic characters entered by the user in the last few times and displaying the stored characters in a virtual keyboard layout. When the user enters data again, the user may quickly select the stored characters, thereby reducing the frequency of switching the current displayed virtual keyboard layout among the virtual keyboard layouts and reducing the frequency of shifting upper/lower cases of alphabetic characters, so the user may conveniently and quickly enter a combination having numeric characters and alphabetic characters, such as personal identity numbers in countries other than the U.S., login accounts, and passwords.

The on-screen virtual keyboard system of the present invention is applied to a touch screen operated electronic device, and includes a simplified virtual keyboard layout, a traditional virtual keyboard layout, and a memory segment. The simplified virtual keyboard layout has a traditional layout switch key and a plurality of reserved keys. The reserved keys are provided for entering input characters, and the traditional layout switch key is provided for switching the simplified virtual keyboard layout to the traditional virtual keyboard layout. The traditional virtual keyboard layout has at least a simplified layout switch key and a plurality of input character keys, wherein the simplified layout switch key is provided for switching the traditional virtual keyboard layout to the simplified virtual keyboard layout, and the input character keys are provided for entering the input characters. The memory segment is provided for storing the latest entered input characters and user-defined input characters, wherein an amount of the input characters stored in the memory segment corresponds to an amount of the reserved keys. The input characters stored in the memory segment are mapped to the reserved keys of the simplified virtual keyboard layout, so the input characters and numeric keys are displayed in the simplified virtual keyboard layout simultaneously, such that the user is able to quickly select and enter any of the numeric keys or the input characters in the memory segment.

The advantage of the present invention is that the simplified virtual keyboard layout only displays the common reserved keys (common alphabetic character keys) and auxiliary function keys, and it is not necessary to display the entire keys, thereby greatly reducing the amount of the keys displayed in the simplified virtual keyboard layout. Therefore, an area of each key is enlarged. Both the user operating the electronic device using fingers instead of a stylus and the user with poor eyesight may easily click on the enlarged keys without mis-touching neighboring keys.

### Brief description of the drawings

The present invention will become more fully understood from the detailed description given herein below for illustration only, and thus not limitative of the present invention, wherein:
FIG. 1 is a virtual keyboard layout of a touch screen operated electronic device in the prior art, which includes numeric keys, lower case alphabetic character keys, and common symbol keys;
FIG. 2 is the virtual keyboard layout of the touch screen operated electronic device in the prior art, which includes upper case alphabetic character keys and the common symbol keys;
FIG. 3 is the virtual keyboard layout of the touch screen operated electronic device in the prior art, which includes the numeric keys and symbol keys;
FIG. 4 is the virtual keyboard layout of the touch screen operated electronic device in the prior art, which includes phonetic symbol keys and the common symbol keys;
FIG. 5 is an enlarged view of the virtual keyboard layout in FIG. 1;
FIG. 6 is an enlarged view of the virtual keyboard layout in FIG. 2;
FIG. 7 is an enlarged view of the virtual keyboard layout in FIG. 3;
FIG. 8 is an enlarged view of the virtual keyboard layout in FIG. 4;
FIG. 9 is a schematic view of a shifting sequence of the keyboard layouts when entering alphanumeric data Al b2C by using a conventional keyboard;
FIG. 10 is an operational flow chart of the traditional virtual keyboard layout;
FIG. 11 is a view of a simplified virtual keyboard layout according to a first embodiment of the present invention;
FIG. 12 is an enlarged view of the simplified virtual keyboard layout in FIG. 11;
FIG. 13 is a traditional virtual keyboard layout with an added keyboard shift key, which includes lower case alphabetic characters, numbers, and common symbols;
FIG. 14 is the traditional virtual keyboard layout with the added keyboard shift key, which includes upper case alphabetic characters and the common symbols;
FIG. 15 is the traditional virtual keyboard layout with the added keyboard shift key, which includes conventional numbers and symbols;
FIG. 16 is the traditional virtual keyboard layout with the added keyboard shift key, which includes conventional phonetic symbols;
FIG. 17 is a main operational flow chart of a simplified alphanumeric virtual keyboard according to the first embodiment of the present invention;
FIG. 18 is an operational flow chart of a memory key according to the first embodiment of the present invention;
FIG. 19 is an operational flow chart of a traditional virtual keyboard shift key according to the first embodiment of the present invention;
FIG. 20 is a view of storing information in a memory segment;
FIG. 21 is a view of reordering data in the memory segment;
FIG. 22 is a view of the simplified alphanumeric virtual keyboard after the data stored in the memory segment is altered according to the first embodiment of the present invention;
FIG. 23 is a view of a shifting sequence of the keyboard layouts when entering an example "Alb2C" according to the first embodiment of the present invention;
FIG. 24 is a view of the keyboard layout after the keys are altered after entering the example "Alb2C" according to the first embodiment of the present invention;
FIG. 25 is a view of the shifting sequence of the virtual keyboard layouts when entering the example "Alb2C" again according to the first embodiment of the present invention;
FIG. 26 is a view of the simplified alphanumeric virtual keyboard according to a second embodiment of the present invention, which includes numerical operators and a decimal point;
FIG. 27 is a view of the simplified alphanumeric virtual keyboard according to a third embodiment of the present invention, which includes the decimal point and a set key; and
FIG. 28 is the simplified alphanumeric virtual keyboard according to a fourth embodiment of the present invention, which includes the set key.

### Detailed description

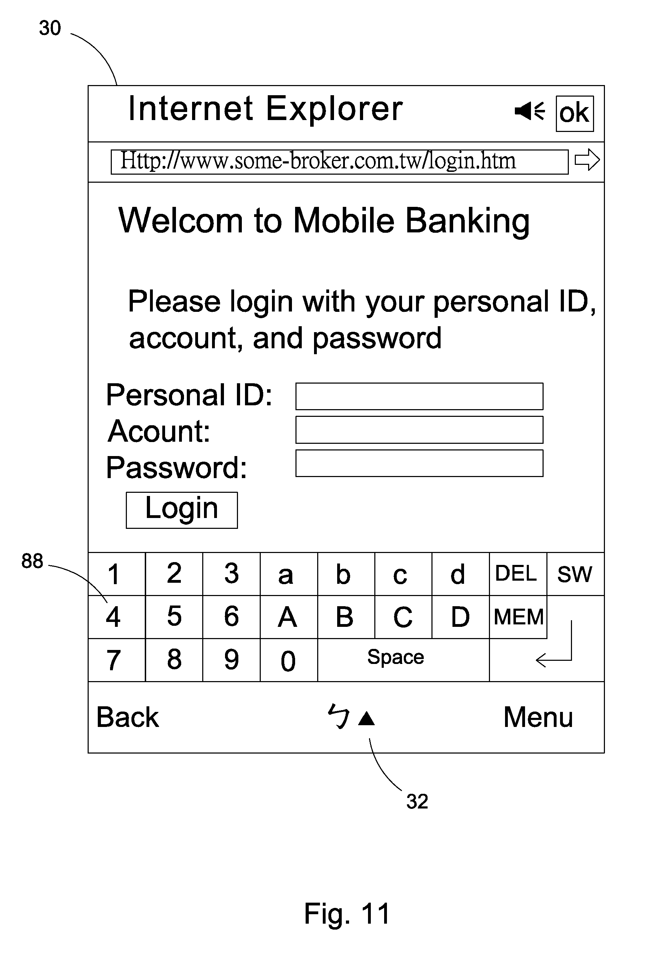

Referring to FIGs. 11 to 16, an on-screen virtual keyboard system according to a first embodiment of the present invention is shown, which is applied in a touch screen operated electronic device. The touch screen operated electronic device may be a cell phone, a PDA (Personal Digital Assistant), a financial/stock PDA, and a MID (Mobile Internet Device)/UMPC (Ultra-Mobile Personal Computer) having a screen being smaller than 7 inches. To illustrate, the touch screen operated electronic device according to the embodiment of the present invention is, for example, a PDA running Microsoft(R) Windows Mobile(R) operating system, and an application program frame 30 is displayed after running an application program, but the present invention is not limited to the aforementioned operation system. The on-screen virtual keyboard system according to the first embodiment includes a simplified virtual keyboard layout 88, one or more traditional virtual keyboard layouts 150, 152, 154, and 156, and a memory segment. The displayed virtual keyboard layout is able to be switched between the simplified virtual keyboard layout 88 and the traditional virtual keyboard layouts 150, 152, 154, and 156 according to demands of a user. Under a specific information entering demand, the simplified virtual keyboard layout 88 may meet the fast entering demand, and under a common information entering demand, the traditional virtual keyboard layouts 150, 152, 154, and 156 may provide complete characters for the user to select and enter, such that the user finishes the general text entering operation.

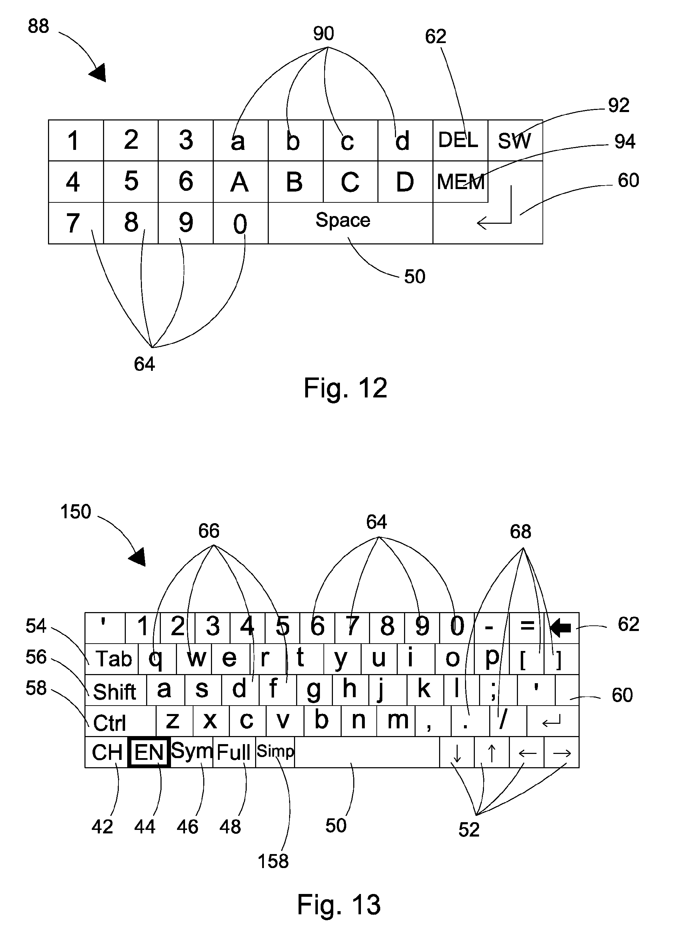

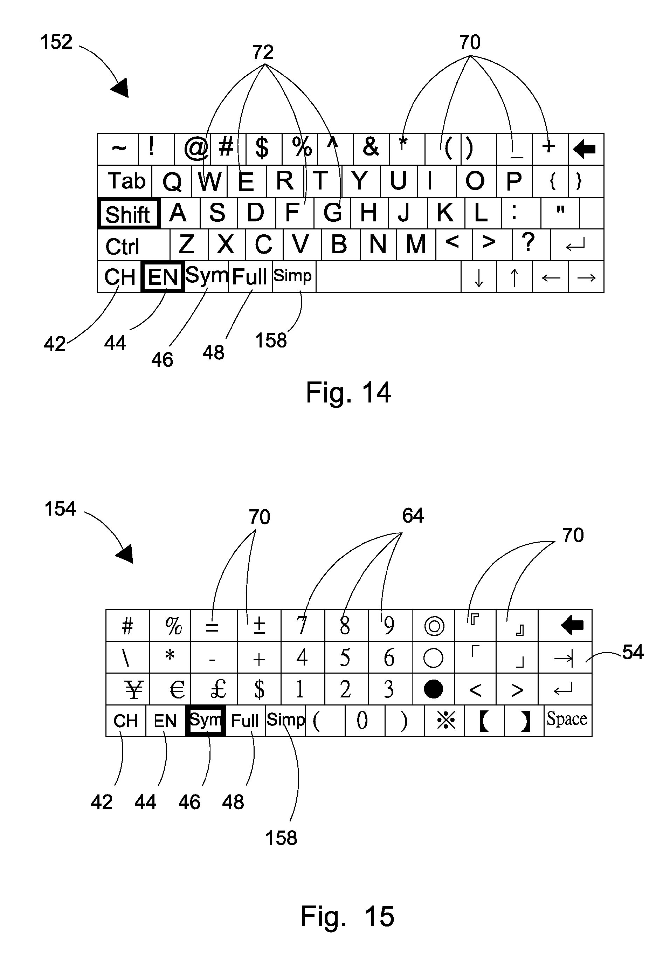

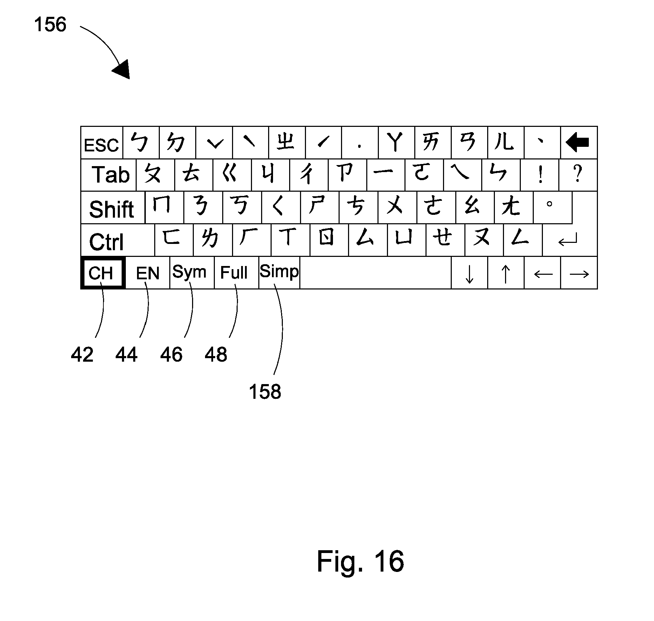

FIG. 11 is the simplified virtual keyboard layout of the on-screen virtual keyboard system according to the first embodiment displayed on the touch screen of the electronic device. FIG. 12 is an enlarged view of the simplified virtual keyboard layout 88 in FIG. 11. FIGs. 13 to 16 are enlarged views of the traditional virtual keyboard layouts 150, 152, 154, and 156. The currently displayed virtual keyboard layout is able to be switched among different virtual keyboard layouts 88, 150, 152, 154, and 156, in which the traditional virtual keyboard layout 150 in FIG. 13 is used to enter lower case alphabetic characters and numeric characters, the traditional virtual keyboard layout 152 in FIG. 14 is used to enter upper case alphabetic characters and semi-shape symbols, the traditional virtual keyboard layout 154 in FIG. 15 is used to enter the numeric characters, mathematical operators, and full-shape symbols, and the traditional virtual keyboard layout 156 in FIG. 16 is used to input Chinese characters.

Referring to FIGs. 11 and 12, the simplified virtual keyboard layout 88 has a plurality of numeric keys 64, a Spacebar 50, an Enter key 60, a Backspace key 62, a plurality of reserved keys, a traditional layout switch key 92, and a memory key 94.

An amount of the numeric keys 64 is ten, including 0-9. The reserved keys have a fixed amount being eight in the first embodiment, and are all alphabetic character keys 90, such that the reserved keys according to the first embodiment are used to enter the alphabetic characters. However, the reserved keys are not limited to the alphabetic character keys 90, and may be any key commonly used by the user. In addition, the amount of the reserved keys according to the first embodiment is eight, but the amount of the practically designed reserved keys is not limited to eight, and may be any amount, or even the amount may be changed according to the demands of the user. In order to prevent the amount of the reserved keys from being too large to exclude other keys from being displayed on the simplified virtual keyboard layout 88, or to result in an excessively small display area of each key, the number of the reserved keys tennis less that or equal to ten. The traditional layout switch key 92 is provided for switch the simplified virtual keyboard 88 to the traditional virtual keyboard layouts 150, 152, 154, and 156 by the user when necessary, and the memory key 94 is used to shift the system to a set mode by the user, so as to set user-defined input characters (common alphabetic characters) which need to be permanently memorized.

Referring to FIGs. 11 and 12, that is the first time that the simplified virtual keyboard layout 88 according to the first embodiment is started, the eight alphabetic character keys 90 defaulted as the reserved keys are displayed, and the corresponding alphabetic characters include four lower case alphabetic characters (a, b, c, and d), and four upper case alphabetic characters (A, B, C, and D) pre-stored in the memory segment as default input characters. Next, touch screen operated electronic device having the simplified virtual keyboard layout 88 continuously monitors the operation of the user using the traditional virtual keyboard layouts 150, 152, 154, and 156 and the simplified virtual keyboard layout 88, stores the latest eight alphabetic characters entered by the user, and accordingly updates the alphabetic characters corresponding to the alphabetic character keys 90. That is to say, as the user continuously operates the touch screen operated electronic device, the input characters corresponding to the eight alphabetic character keys 90 are continuously altered, so as to correspond to the latest eight input characters (alphabetic characters) entered by the user.

In addition to storing the input characters finally entered by the user, touch screen operated electronic device having the on-screen virtual keyboard system may directly store the common input characters (alphabetic characters), after accepting the setting of the user, such that at least one of the alphabetic character keys 90 is the common alphabetic character defined by the user, or so called user-defined character. The user may define one alphabetic character to be corresponding to the common alphabetic characters by pressing the memory key 94. Here, the remaining seven keys are used to store the latest seven characters entered by the user. If the user defines two common alphabetic character keys, the remaining six keys are used to memorize the latest six characters entered by the user, and so forth.

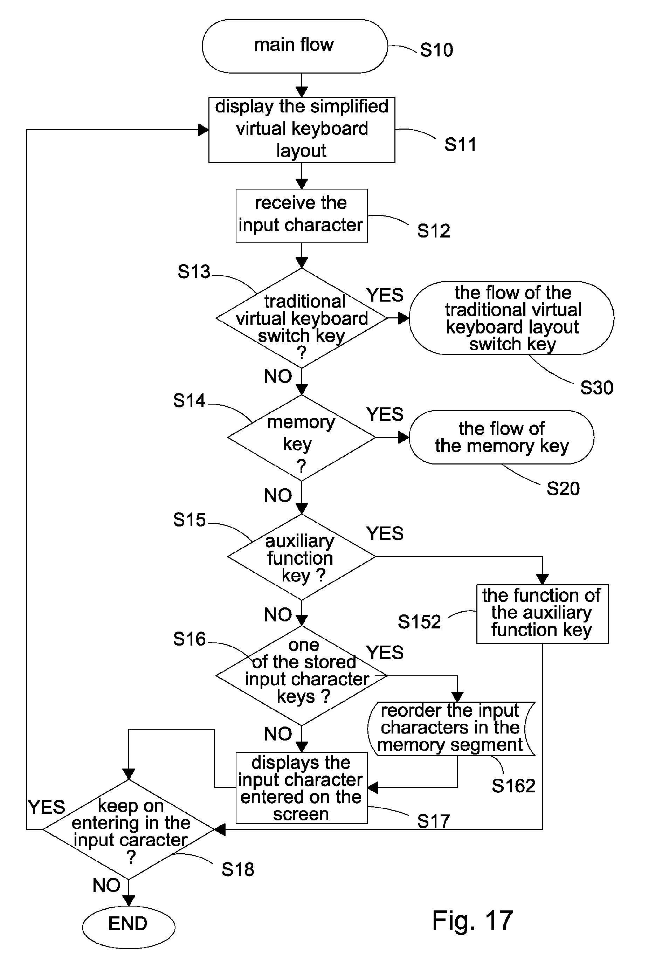

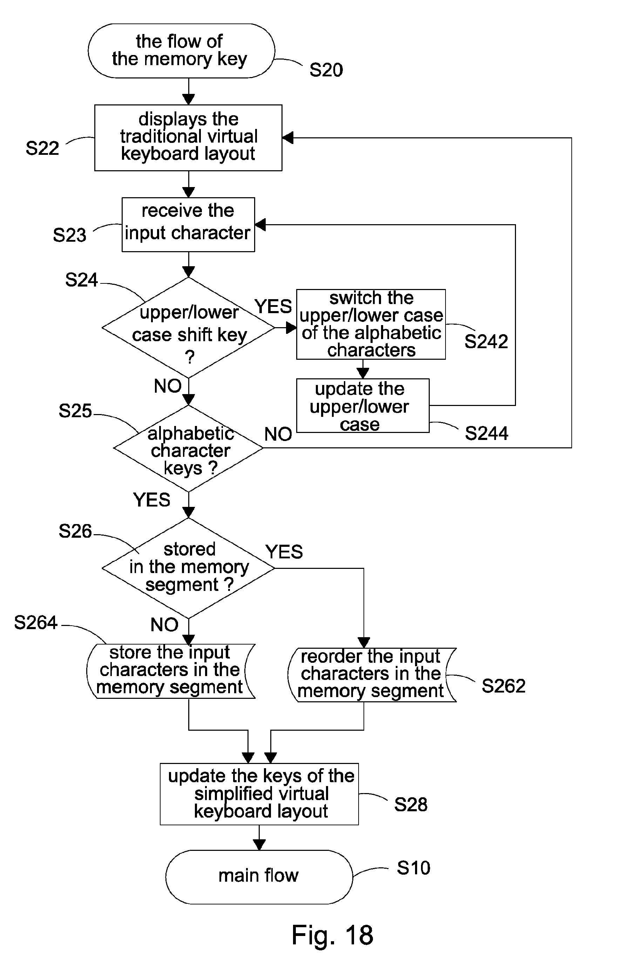

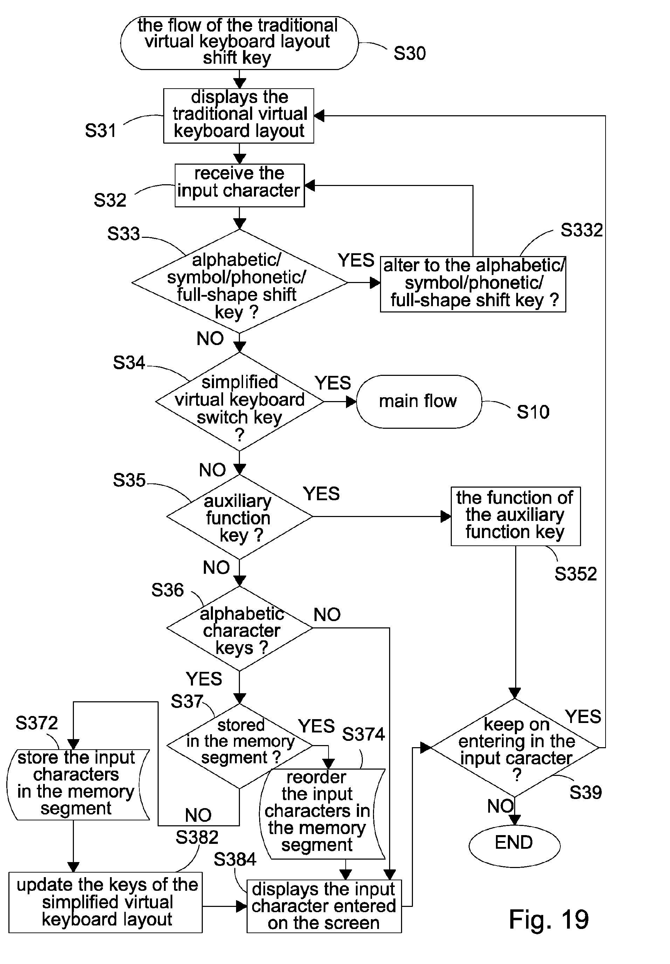

Referring to FIGs. 17, 18, and 19, a flow of an input method of the on-screen virtual keyboard according to the first embodiment of the present invention is shown. FIG. 17 is a main operational flow chart of a simplified alphanumeric virtual keyboard layout, FIG. 18 is an operational flow chart of the memory key 94, and FIG. 19 is an operational flow chart of switching to the traditional virtual keyboard layout by using the traditional layout switch key 92.

Referring to FIG. 17, after starting a main flow (S10), if the user clicks on a display/hide key 32 of the on-screen virtual keyboard of the touch screen operated electronic device, the touch screen operated electronic device displays the simplified virtual keyboard layout on the screen (S11), which is the display frame shown in FIG. 11.

Next, the touch screen operated electronic device receives the input character entered by the user through the simplified virtual keyboard layout 88 (S12). After receiving input character entered by the user, the touch screen operated electronic device running the program determines whether the input character entered is the traditional virtual keyboard shift key or not (S13).

If the determination is "yes" in Step S13, the procedure proceeds to the flow of the traditional virtual keyboard layout switch key (S30), which is the flow as shown in FIG. 19. If the determination is "no" in Step S13, the procedure keeps on assessing whether the input character entered is the memory key 94 or not (S14).

If it is determined that the input character entered is the memory key 94 in Step S14, the procedure proceeds to the flow of the memory key (S20), which is the flow as shown in FIG. 18. If it is determined that the input character entered is not the memory key 94 in Step S14, it is determined whether the input character entered is an auxiliary function key or not (S15).

If it is determined that the input character entered is the auxiliary function input Step S15, the function of the auxiliary function key S152 is executed. The auxiliary function includes an Enter key 60, a Backspace key 62, and a Spacebar 50. The function of the Enter key 60 is executed to add a new line on the screen, or execute or select default keys in the programs. The function of the Backspace key is executed to delete one character before a position of a cursor on the screen. After Step S152 has been executed, the touch screen operated electronic device waits to determine whether the user decides to keep on entering in the input character (S18).

In Step S15, if the touch screen operated electronic device running the program determines that the input character entered is not the auxiliary function key, the touch screen operated electronic device keeps on determining whether the input character entered is one of the input character keys stored in the memory segment or not (S16). In the first embodiment, the input character keys are, but not limited to, the alphabetic character keys 90. If the determination is "yes" in Step S16, the touch screen operated electronic device reorders the input characters in the memory segment (S162) and maps the input characters to the alphabetic character keys 90 , and updates the alphabetic character keys 90 on the screen. In Step S15, if the touch screen operated electronic device determines that the input character entered is not the alphabetic character key 90, the input character entered must be the numeric key 64 or the spacebar 50, and here the touch screen operated electronic device displays the input character entered on the screen 118 (S17), and the procedure proceeds to Step S18 continue determining whether the user selects to keep on entering the input character. If the user selects to not keep on entering the input character, the main flow is ended. If the user continues to enter information, the procedure returns to Step S11 to display the simplified virtual keyboard layout 88.

Referring to FIG. 18, which is a flow chart of the memory key. If the user presses the memory key 94 in the simplified virtual keyboard layout 88 according to the first embodiment of the present invention, a sub-flow is started (S21).

Firstly, the touch screen operated electronic device displays the traditional virtual keyboard layouts 150, 152, 154, and 156 on the screen (S22), as shown in FIG. 13. Next the touch screen operated electronic device running the program receives the input character entered by the user (S23). After the user entering the input character, the touch screen operated electronic device determines whether the input character entered is an upper/lower case shift key 56 or not (S24). If the user input is the upper/lower case shift key 56, the electronic device switches the upper/lower case of the alphabetic characters (S242). Next, update the upper/lower case of the traditional virtual keyboard layout displayed on the screen (S244), as shown in FIGs. 13 to 14. If the originally alphabetic characters displayed on the traditional virtual keyboard layout are lower case alphabetic characters, the alphabetic characters displayed on the traditional virtual keyboard layout are altered to upper case alphabetic characters. If the originally alphabetic characters displayed on the traditional virtual keyboard layout are upper case alphabetic characters, the alphabetic characters displayed on the traditional virtual keyboard layout are altered to lower case alphabetic characters. After the alphabetic characters displayed on the traditional virtual keyboard layout are already updated in Step S244, the procedure returns to Step S23 to receive the input character entered.

If it is determined that the input character entered is not the upper/lower case shift key 56 in Step S24, it is determined whether the input character entered by the user is the input character entered by the alphabetic character keys (a lower case character 66 or an upper case character 72), or not (S25).

If the determination is "no" in Step S25, the procedure returns to Step S22 to redisplay the traditional virtual keyboard layout (S22), so as to re-receive the input character entered by the user (S23), the reason for which is that the memory function only memorizes the input characters represented by the upper/lower case alphabetic character keys input by the user.

If the touch screen operated electronic device determines that the input character entered by the user is the input character entered by the alphabetic character key (the lower case character 66 or the upper case character 72), in Step S25, it is determined whether or not the entered input character is stored in the memory segment (S26). If the entered input character is stored in the memory segment, reorder the input characters in the memory segment (S262). If the entered input character is not stored in the memory segment, store the input character in the memory segment (S264), and then update the keys of the simplified virtual keyboard layout 88 displayed on the screen (S28), and the procedure then returns to the main flow (S10).

Referring to FIG. 19, which is a flow chart of operating the shift key of the traditional virtual keyboard layout. If the user presses the traditional layout switch key 92 of the traditional virtual keyboard in the simplified virtual keyboard layout 88 according to the first embodiment of the present invention, the flow of the traditional virtual keyboard shift key S30 is started, and the electronic device directly displays the traditional virtual keyboard layout (S31), as shown in FIG. 13.

Next, the touch screen operated electronic device receives the input character entered by the user (S32), and determines whether the input character entered is an alphabetic character shift key /symbol shift key /phonetic input method shift key /full-shape shift key according to the input character entered (S33).

If the determination is "yes" in Step S33, alter the virtual keyboard layout to the alphabetic character/symbol/phonetic/full-shape virtual keyboard layout (S332), and the procedure again returns to Step S32 to receive the input character entered by the user.

If the determination is "no" in Step S33, that is the key information entered is not the alphabetic character shift key/symbol shift key/phonetic shift key/full-shape shift key, the touch screen operated electronic device further determines whether the input character entered by the user is the simplified layout switch key 158 according to the first embodiment (S34).

If the determination is "yes" in Step S34, the procedure returns to the main flow S10. If the determination is "no" in Step S34, the touch screen operated electronic device determines whether or not the key information entered is the auxiliary function key (S35).

If the determination is "yes" in Step S35, the function of the auxiliary function key is executed (S352), and after finishing executing the task the touch screen operated electronic device waits to determine whether or not the user selects to keep on entering the information (S39). If the touch screen operated electronic device determines that the user keeps on entering the information in Step S39, the procedure returns to Step S31 to display the traditional virtual keyboard layout. If the touch screen operated electronic device determines that the user selects to cease entering the information in Step S39, the main flow ends.

In Step S35, if the touch screen operated electronic device determines that the input character entered by the user is not the auxiliary function key, the touch screen operated electronic device keeps on determines whether the key information entered by the user is the alphabetic character key or not (S37). If the input character entered by the user is not the alphabetic character key, the input character entered is directly displayed on the screen (S384).

If the entered input character is one of the alphabetic character keys, the touch screen operated electronic device checks whether the entered input character is already stored in the memory segment or not (S372). If the entered input character is already stored in the memory segment, the sequence of the stored input characters in the memory segment is reordered (S374), and then the entered input character is displayed on the screen (S384). Therefore, no duplicates exist among the input characters stored in the memory segment. If the entered input character is a new input character not stored in the memory segment, the input character is stored in the memory segment (S372), then the reserved keys displayed on the simplified virtual keyboard layout is updated (S386), such that the new input character is re-mapped to the reserved key (the alphabetic character key 90) of the simplified virtual keyboard. Next, the entered input character is displayed on the screen (S384). Finally, the touch screen operated electronic device determines the user selects to continue entering the input character (S39), so as to determine whether to end the flow or redisplay the traditional virtual keyboard layout (S31).

As described above, in the present invention, the frequently used input characters defined by the user and the latest input characters entered by the user are stored in the memory segment, and are mapped to the reserved keys, such that the input characters may be quickly selected and entered for the next time in the simplified virtual keyboard layout. The memory segment permanently stores the input characters, and the stored input characters are not limited to be stored in a file (for example, a program configuration file) or a non-volatile memory.

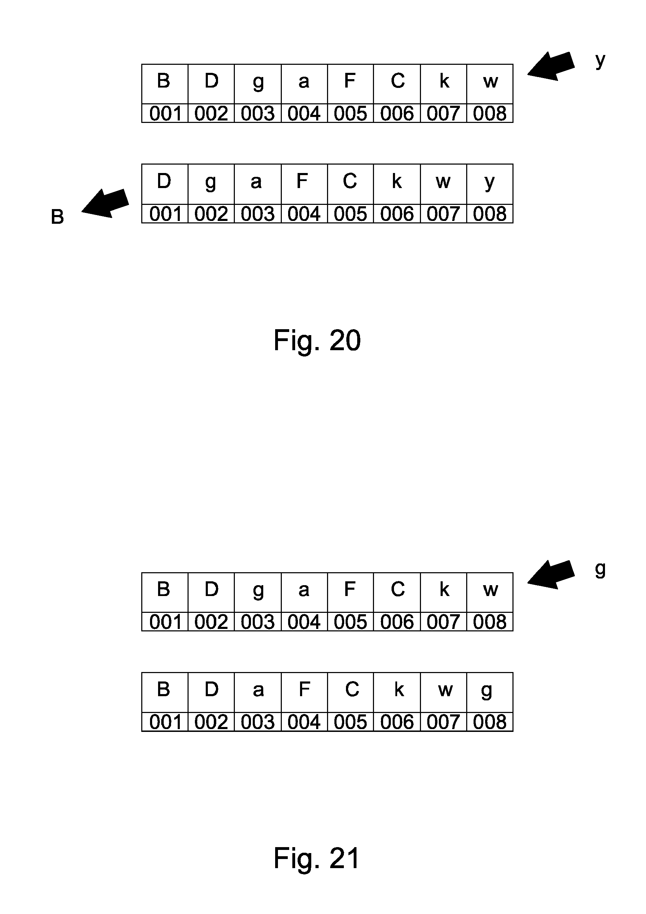

Referring to FIG. 20, the latest entered input characters stored in the memory segment are sequenced in first-in first-out (FIFO). An upper part of FIG. 20 is an original memory segment, in which eight memory cells exist, the input characters B, D, g, a, F, C, k, and w are sequenced according to a storing sequence. When a input character y is entered to be stored in the memory segment, the input character B is the earliest stored in the memory segment and is abandoned while the latest one input character y is stored in the memory segment, so as to give the space for the subsequent input characters to perform replacements forwards in sequence, after the input character y is stored in the memory segment, the updated memory segment is as shown in a lower part of FIG. 20. The procedure is Steps S264 and S372 in FIGs. 18 and 19, in which the input character "y" is stored in the memory segment. The input characters stored in the memory segment are not repeated, but the upper cases and the lower cases of the same alphabetic character are defined as different input characters.

Referring to FIGs. 17, 18, and 19, in Steps S162, S262, and S374, the input characters in the memory segment are reordered is different from the Steps S264 and S372 in which the input characters are stored in the memory segment, in Steps S264 and S372, the new input characters to be stored are not stored in the memory segment, but in Steps S162, S262, and S374, the input characters to be stored are already stored in the memory segment.

Referring to FIG. 21, the upper part of FIG. 21 is the original memory segment, the entered input character g is already stored in the memory segment, but in the memory segment the input character g is already stored on an address 003, so the action of storing the entered input character g is practically an action of reordering the memory segment, the input character g is moved to an address 008 and the subsequent data performs the replacement forwards, the updated memory segment is as shown in FIG. 21, and the information of address 008 represents the input character entered by the key last used. The procedure is Steps S162, S262, and S374.

In order to further understand the difference of the operating flow of the virtual keyboard layout between the present invention and the prior art, here, for the description of the input character entering flow of the present invention, an example "Alb2C" is entered, in which the operating flow of the on-screen virtual keyboard layout in the prior art may be obtained with reference to the description of FIG. 9 and the prior art.

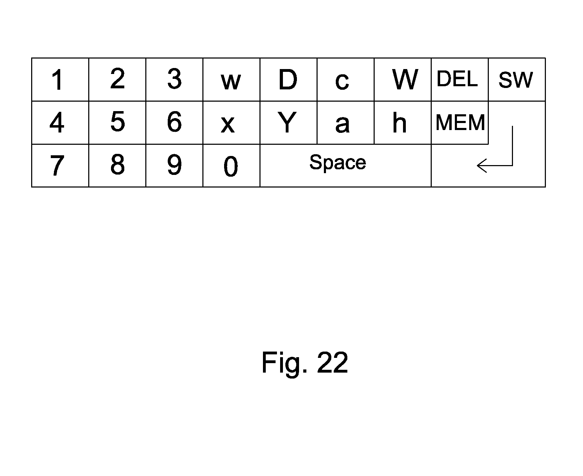

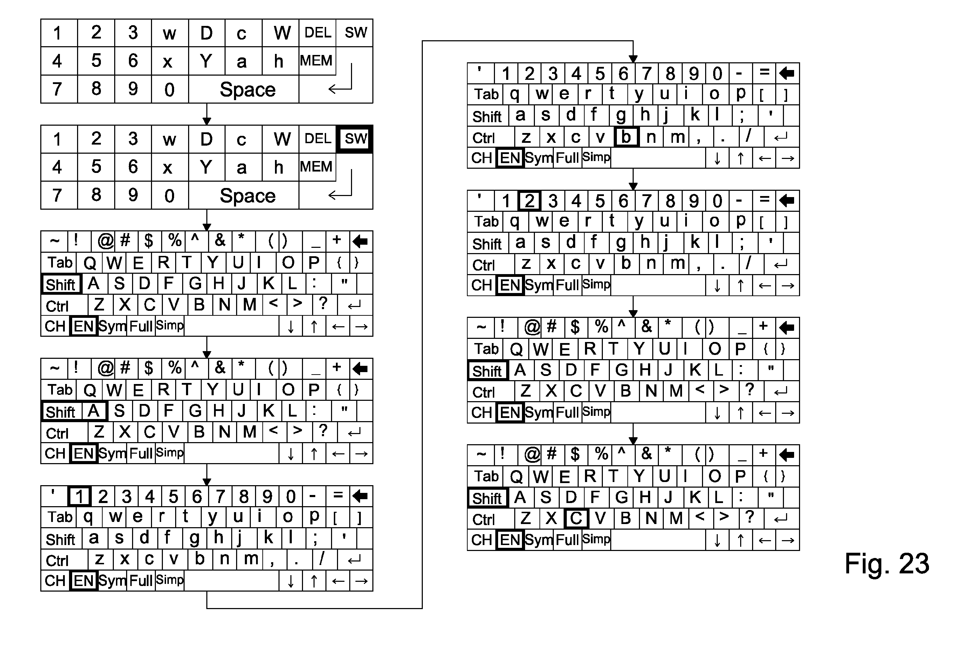

Referring to FIG. 22, in which no alphabetic character displayed on the simplified virtual keyboard layout is identical to any alphabetic characters of the input example "Alb2C", and the alphabetic characters displayed on the simplified virtual keyboard layout are w, D, c, W, x, Y, a, and h in sequence. Referring to FIG. 23, in which the flow of entering the example "Alb2C" is described as the following steps:
1. Display the simplified alphanumeric virtual keyboard.
2. Switch to the traditional virtual keyboard layout by pressing the traditional virtual keyboard shift key.
3. Switch the lower case alphabetic characters to the upper case alphabetic characters by pressing the upper/lower case Shift key.
4. Enter "A" (the virtual keyboard layout is switched to the lower case alphabetic character automatically after the upper case alphabetic character "A" is entered).
5. Enter "1".
6. Enter b".
7. Enter "2".
8. Switch the lower case alphabetic characters to the upper case alphabetic characters by pressing the upper/lower case Shift key.
9. Enter "C".

It may be known from the operating flow of the traditional virtual keyboard in the prior art (as shown in FIG. 9), and the operating sequence of the keyboard according to the first embodiment of the present invention (as shown in FIG. 23), that even during the first use in the first embodiment of the present invention, no stored alphabetic character key is identical to any one of input example "Alb2C", and the operation steps of the present invention only has one more step as compared with operation steps of the traditional virtual keyboard. When the user needs to input the same data next time, the steps of shifting to the traditional virtual keyboard and shifting the alphabetic character upper/lower case may be reduced.

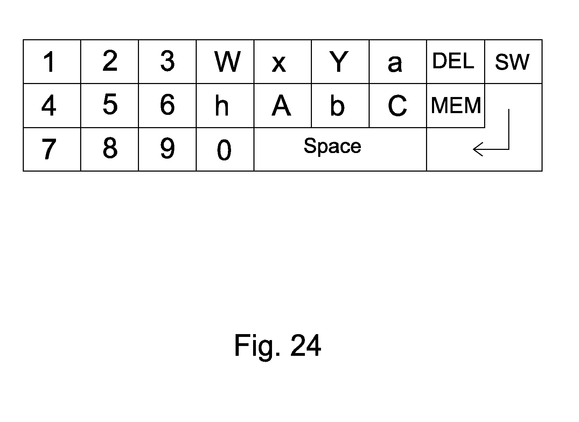

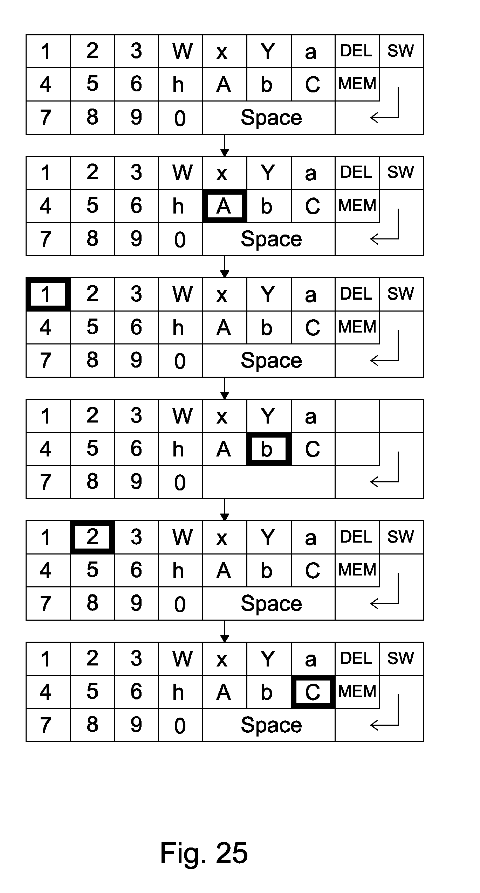

FIG. 24 is a view of the simplified virtual keyboard layout after entering the example "Alb2C", and FIG. 25 is a view of the operating sequence of the virtual keyboard of entering the same example "Alb2C" again by the user by using the simplified virtual keyboard layout 88 of FIG. 24. It may be known from FIG. 25 that only six steps are required when entering the same example once again. As compared with the prior art in which eight steps are still required, in the embodiment of the present invention, after the common alphabetic character keys are stored in the memory segment, the operating flow of the same key-in operation is simplified.

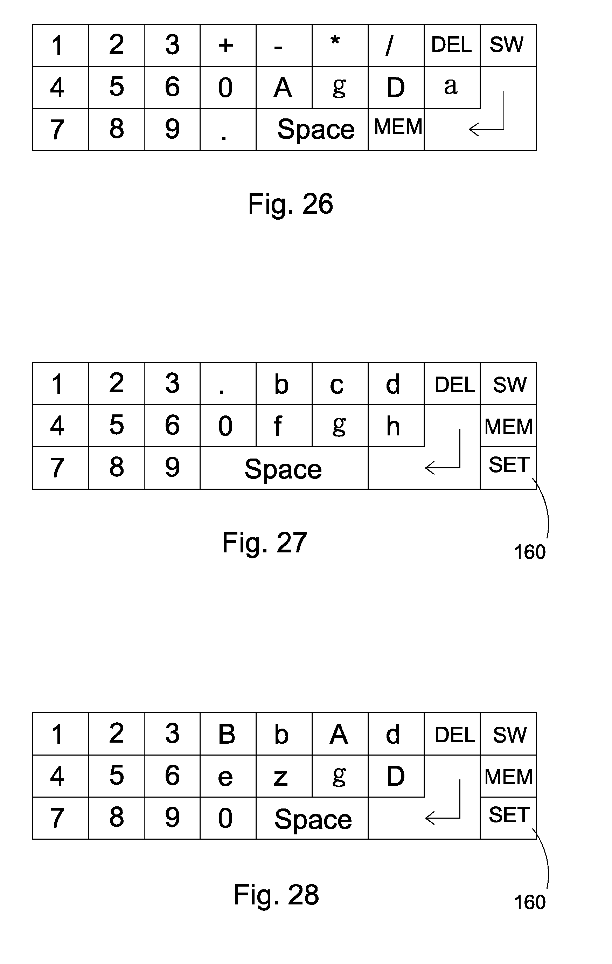

FIGs. 26, 27, and 28 are views of the different embodiments of the present invention.

FIG. 26 shows the simplified virtual keyboard layout according to a second embodiment of the present invention, in which four numerical operators (addition, subtraction, multiplication, and division) and a decimal point are added, so totally five keys are increased, and the space of the memory segment is reduced to accommodate four input characters, such that the user may conveniently use the simplified virtual keyboard layout as the calculator keyboard when using the calculator function of the touch screen operated electronic device.

FIG. 27 shows the simplified virtual keyboard layout according to a third embodiment of the present invention, in which the decimal point and a set key 160 are added, and the space of the memory segment is reduced to accommodate six input characters. After pressing the set key 160, the user enters a set frame (not shown), such that the user may set the size of the two memory segments, one block is used to store the user-defined input character, and the other block is used to store the latest input characters entered by the user. The user uses the input character keys to entering the input characters are not limited to the alphabetic character keys, that is, the user may set whether to store the keys except for the alphabetic character keys as the input character keys, for example, phonetic symbol keys, the symbol keys, the auxiliary function keys, such that the different symbols, Chinese characters, and other characters of different language (depending on the electronic device and a supporting degree of the operating system) etc., are used as the input characters and mapped to the reserved keys.

FIG. 28 shows the simplified virtual keyboard layout according to a fourth embodiment of the present invention, in which a set key 160 is added, and the memory segment still stores eights reserved keys.

The different embodiments here are used to describe that the present invention is not limited to the fixed virtual keyboard layouts, the fixed keys and key positions, and the fixed size of the memory segment (the amount of the stored input characters may be one to ten) according to the embodiment. Further, all the above drawings are not marked according to the practical proportion, and are only schematic views.

In view of the above, the present invention provides an on-screen virtual keyboard system having the memory function and an input method of the on-screen virtual keyboard. When entering the commonly used combination having numeric characters and alphabetic characters, for example, personal identity numbers in countries other than U.S., login accounts, and login passwords, the user may quickly enter the combination. The common input characters may be stored, and the non-common keys in the virtual keyboard layout may be reduced, such that the display area of each key is greatly increased, and it is conveniently for the user to input the information by using fingers without worrying that the neighboring keys would be mis-touched. However, if intending to use the common virtual keyboard layout, the user may enter the data according to the accustomed manner. The present invention does not intend to totally replace the traditional virtual keyboard layout, but provides another convenient operation selection for the user.

In the above drawings, the PDA running Microsoft(R) Windows Mobile(R) operating system is taken as the example, but the touch screen operated electronic device according to the present invention is not limited to be a PDA and to run Microsoft(R) Windows Mobile(R) operating system. The touch screen operated electronic device may be electronic devices having the touch screen function (such as the MID, the UMPC, the PDA, and the cell phone), and the operating system thereof may be any operating system.

While the present invention has been described by the way of example and in terms of the preferred embodiments, it is to be understood that the invention is not limited to the disclosed embodiments. To the contrary, it is intended to cover various modifications and similar arrangements. Therefore, the scope of the appended claims should be accorded the broadest interpretation so as to encompass all such modifications and similar arrangements.

## Claims

1. A on-screen virtual keyboard system, applied to a touch screen operated electronic device, comprising:
a simplified virtual keyboard layout, having a traditional layout switch key, and a plurality of reserved keys for entering input characters;
at least a traditional virtual keyboard layout, having a simplified layout switch key for switching the traditional virtual keyboard layout to the simple virtual conventional layout and a plurality of input character keys for entering the input characters, wherein the traditional layout switch key of the simplified virtual keyboard layout is provided for switching the simplified virtual keyboard layout to the traditional virtual keyboard layout; and
a memory segment, storing the latest entered input characters;
wherein the on-screen virtual keyboard system is arranged such that the input characters stored in the memory segment are mapped to the reserved keys of the simplified virtual keyboard layout for a user quickly choosing any of the input characters stored in the memory segment from the simplified virtual keyboard layout.

2. The on-screen virtual keyboard system as claimed in claim 1, further comprising a memory key, for switching an operation mode of the memory segment to store the input characters input by a user as user-defined input characters.

3. The on-screen virtual keyboard system as claimed in claim 1, wherein an amount of the reserved keys is less than or equal to ten.

4. The on-screen virtual keyboard system as claimed in claim 3, wherein no duplicates exist among the input characters stored in the memory segment.

5. The on-screen virtual keyboard system as claimed in claim 4, wherein a plurality of default input characters is pre-stored in the memory segment.

6. The on-screen virtual keyboard system as claimed in claim 4, wherein the latest entered input characters stored in the memory segment are sequenced in first-in first-out, and the input character earliest stored in the memory segment is abandoned while the latest one input character is stored, such that the subsequent input characters perform replacements forwards in sequence.

7. The on-screen virtual keyboard system as claimed in claim 4, wherein the sequence of the input characters in the memory segment are reordered when the latest one of the input character is already stored in the memory segment.

8. The on-screen virtual keyboard system as claimed in claim 1, wherein the input characters stored in the memory segment are alphabetic characters.

9. The on-screen virtual keyboard system as claimed in claim 8, wherein upper case and lower case of each of the alphabetic characters is defined as different input characters.

10. The on-screen virtual keyboard system as claimed in claim 1, wherein the memory segment is stored in a non-volatile memory.

11. The on-screen virtual keyboard system as claimed in claim 1, wherein the simplified virtual keyboard layout further comprises a plurality of numeric keys.

12. The on-screen virtual keyboard system as claimed in claim 1, wherein the simplified virtual keyboard layout comprises an Enter key, a Spacebar key, and a Backspace key.

13. The on-screen virtual keyboard system as claimed in claim 1, wherein the simplified virtual keyboard layout comprises a plurality of numerical operators and a decimal point.

14. The on-screen virtual keyboard system as claimed in claim 1, wherein the memory segment stores input characters defined by a user, and an amount of all the input characters stored in the memory segment is equal to an amount of the reserved keys.

15. The on-screen virtual keyboard system as claimed in claim 14, further comprising a set key, for altering an amount of the latest entered input characters and an amount of the user defined input characters stored in the memory segment.
